# EUROPEAN PATENT SPECIFICATION

(11) **EP 3 878 692 B1**
(45) Date of publication and mention of the grant of the patent: **27.07.2022**
(21) Application number: 20382171.5
(22) Date of filing: 10.03.2020
(51) Int. Cl.: B60Q 3/252, B60Q 3/64, B60J 3/02

(54) **VEHICLE SUNVISOR WITH A VANITY MIRROR ASSEMBLY HAVING A LIGHTING DEVICE**
FAHRZEUGSONNENBLENDE MIT EINER SCHMINKSPIEGELANORDNUNG MIT EINER BELEUCHTUNGSVORRICHTUNG
PARE-SOLEIL DE VÉHICULE DOTÉ D'UN ENSEMBLE MIROIR DE COURTOISIE DOTÉ D'UN DISPOSITIF D'ÉCLAIRAGE

(43) Date of publication of application: 15.09.2021
(73) Proprietor: Grupo Antolin-Ingenieria, S.A., 09007 Burgos (ES)
(72) Inventor: MATERNE, Jimmy, 25021 Besançon (FR); GUYOT, Cyril, 25021 Besançon (FR); L'HOTE, Hubert, 88360 Rupt-Sur-Moselle, Vosges (FR)
(74) Representative: Capitán García, Maria Nuria

(56) References cited:
- EP-A1- 3 305 594
- DE-B3-102005 037 320
- JP-A- 2011 000 974
- JP-A- 2011 183 958
- JP-U- S58 100 815
- KR-A- 20170 133 807

## Description

### FIELD OF THE INVENTION

The present invention relates to a vehicle sunvisor with a vanity mirror assembly having a lighting device particularly configured to emit light over the vanity mirror surrounding area.

### BACKGROUND OF THE INVENTION

Vanity mirrors are widely used in current vehicles as a common accessory of the sunvisors.

In order to enhance the functionality and the aspect of the vanity mirrors, they normally comprise lighting devices which are activated when the lid which covers the vanity mirror is opened.

Said lighting devices can provide a functional lighting, as it is disclosed in patents US4792884, US5184888, US5575552, EP2142392, a decorative lighting as it is disclosed in patent CN108944368, or both types of lighting at the same time as it is disclosed in the patent JP2005219635.

The decorative lighting is that which provides an ambient lighting in the vehicle interior in order to beautify said vehicle interior.

The functional lighting is that which improves the lighting conditions of the vehicle interior for the vehicle occupant.

The different types of lighting devices according to the functional/decorative classification depend on the light emission direction, the intensity of the light emitted or the configuration of the light exits.

With respect to the above features, among the known ways to integrate the lighting devices to the vanity mirror, some of them comprise punctual lighting sources, or punctual lighting sources combined with light guides, both designed and distributed accordingly to emit functional and/or decorative lighting and to the configuration of the light exits.

Light guides are widely used in vehicle interior lighting applications as an advantageous option which is reduced in power consumption and designed to illuminate wide areas. In order to do this, the main functions of the light guides are distributing and transmitting the light emitted by one or more punctual light sources.

In the case in which the target is to illuminate the area surrounding the vanity mirror in order to obtain functional or decorative lighting, the problem to be addressed is to uniformly and sufficiently illuminate an area having a wide length, particularly the length corresponding to the perimeter of the vanity mirror, from the punctual light sources.

According to said configuration an optimal option for configuring the lighting device is the use of a light guide.

Patent CN108944368 discloses a device in which in order to illuminate the surrounding area of the vanity mirror according to an uniform light emission, it uses a light guide having an annular configuration surrounding the perimeter area of the vanity mirror in combination with several punctual lighting sources, particularly LEDs (light emitting diodes), which are distributed along the perimeter of the light guide.

One of the drawbacks of the configuration disclosed in the patent CN108944368 is the use of several LEDs. The large number of LEDs makes expensive and complex the lighting device.

As a direct consequence of this, other drawback of the configuration of the Chinese patent is to provide a printed circuit board having a special and larger shape adapted to the distribution of the LEDs provided along the annular light guide. DE 10 2005 037320 B discloses a vehicle sunvisor with a vanity mirror assembly having a lighting device, according to the preamble of claim 1.

In view of the disadvantages mentioned above, the object of the invention is a vehicle sunvisor with a vanity mirror assembly having a lighting device wherein the lighting device is configured to emit uniform light along the vanity mirror surrounding area using a minimum number of LEDs and occupying a minimum space in the thickness direction of the vanity mirror assembly.

### DESCRIPTION OF THE INVENTION

The present invention is established and characterised by the independent claim, while the dependent claims describe additional features thereof.

The vehicle sunvisor with a vanity mirror assembly of the present invention defines a vanity mirror peripheral area and a vanity mirror surrounding area.

The vanity mirror peripheral area is the area forming part of the vanity mirror which it is extended along the perimeter of the vanity mirror.

The vanity mirror surrounding area is the area of the vehicle sunvisor which surrounds the vanity mirror and through which the light emitted by the lighting device is emitted to the outside of the vanity mirror assembly.

The vanity mirror surrounding area can form part of the vanity mirror, for example in the particular case in which the light is emitted through a transparent window defined in the peripheral area of the vanity mirror in such a way that in this particular case the vanity mirror surrounding area coincides with the vanity mirror peripheral area, or it could be formed by the collaboration of several components of the sunvisor, particularly it can be configured by a gap between the perimeter of the vanity mirror and a perimeter wall of the supporting carrier or a wall forming part of other part of the sunvisor.

The minimum space occupied by the whole assembly according to the thickness direction of the vanity mirror, that is, according to a direction perpendicular to the main surface of the vanity mirror, is achieved by the combination of the parallel disposition of the printed circuit board to the main surface of the vanity mirror with a first light guide having a parallel disposition being between the supporting carrier and the vanity mirror.

The use of only one LED for lighting the whole vanity mirror surrounding area allows configuring a lighting device less expensive and less complex than the known lighting devices disclosed in the prior art wherein several light sources are used to achieve the same effect.

The advantages provided by the compact and simple vanity mirror assembly described above in which there is only one LED emitting light in a direction perpendicular to the first light guide, brings additional problems concerning how to achieve an uniform light emission over the vanity surrounding area taking into account that said area has a large length.

In order to address said additional problems, the invention proposes a particular configuration of a first light guide comprising a light distribution part and a light emission part.

Particularly the uniform light emission is achieved by the particular configuration of different portions forming each of the parts which form part of the first light guide, namely the light injection point with the light spreading means, the first light distribution portion, the two second light distribution portions, which belong to the light distribution part, and the light extracting means which belong to the light emission part.

The light injection point and more particularly the light spreading means catches the light emitted by the first light source and enters said light inside the first light guide.

The first light distribution portion distributes the light emitted by the first light source towards the two halves of the light emission part, particularly it distributes the light between the two second distribution portions placed at opposite sides of the first light distribution portion.

Each of the second light distribution portions distributes and redirects the light to the quarters of the light emission portion of the first light guide.

The light emission part distributes the light all along its way.

The light extracting means extract the distributed light along the surrounding vanity mirror area. Particularly, they are configured in such a way that they uniformly emit the light along the total length of the surrounding vanity mirror area.

Due to the above described particular configuration of the first light guide, it is possible to uniformly emit the light over the vanity mirror surrounding area using a minimum number of light sources, particularly only one LED, and at the same time to achieve that the assembly occupies a minimum space according of the thickness direction of the vanity mirror.

On the other hand, due to the particular configuration of the first light guide having a ring shape, it is possible to combine the first light guide with the second and the third light guides according to the configurations disclosed in claims 11 and 12. It is because the ring configuration of the first light guide provides a free space in the supporting carrier to house additional light guides. In this way the vanity mirror assembly is able to offer other different lighting functions and effects, such as for example decorative lighting, and functional lighting, or a combination or both.

### DESCRIPTION OF THE FIGURES

The present specification is completed by a set of figures that illustrate a preferred embodiment and in no way limit the invention.
Figure 1 shows a perspective view of a vehicle sunvisor wherein the vanity mirror according to the invention is assembled.
Figure 2 shows an exploded perspective view of a vanity mirror assembly according to a first embodiment of the invention.
Figure 3 shows a partial cross-section view of the vanity mirror assembly according to the first embodiment represented in the figure 2.
Figure 4 shows an exploded perspective view of a vanity mirror assembly according to a second embodiment of the invention.
Figure 5 shows a partial cross-section view of the vanity mirror assembly according to the second embodiment represented in the figure 4.
Figure 6 shows a plant view of the first light guide according to the embodiment represented in the figures 2 and 3.
Figure 7 shows a detailed enlarge view of the figure 6 corresponding to the light distribution part of the first light guide according to the first embodiment.
Figure 8 shows a cross-section view according to the plane AA represented in the figure 7 wherein the light spreading means comprise two slopped planes.
Figure 9 shows a partial perspective view of the middle injection view wherein the light spreading means comprise a conical shape.
Figure 10 shows a detailed cross-section view of the vanity mirror assembly representing the portion wherein the light is injected inside the first light guide.
Figure 11 shows an exploded perspective view of a vanity mirror assembly according to a third embodiment of the invention.
Figure 12 shows a partial cross-section view of the vanity mirror assembly according to the third embodiment represented in the figure 11.
Figure 13 shows an exploded perspective view of a vanity mirror assembly according to a forth embodiment of the invention.
Figure 14 shows a partial cross-section view of a portion of the vanity mirror assembly according to the forth embodiment represented in the figure 13.
Figure 15 shows a partial perspective view of the light extracting means according to the embodiments represented in the figures 5 and 14.

### DETAILED DESCRIPTION OF THE INVENTION

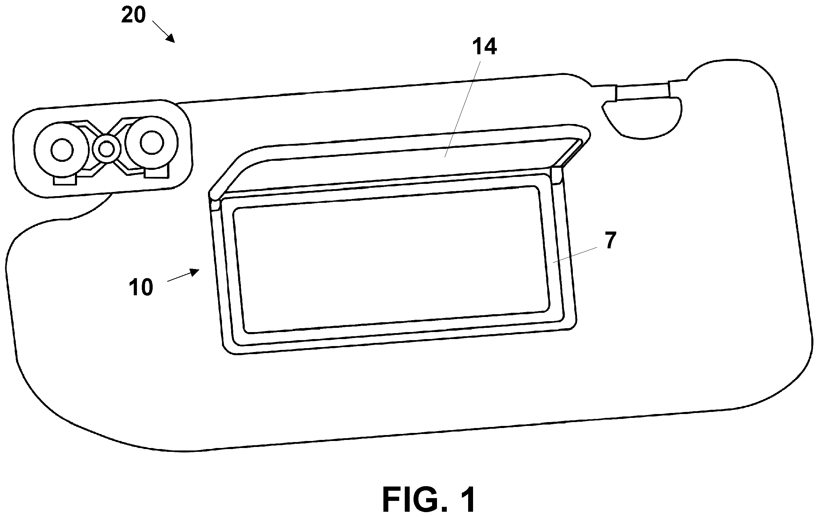

Figure 1 shows a vehicle sunvisor (20) with a vanity mirror assembly (10) according to the invention.

The invention considers several ways to attach the vanity mirror assembly (10) to the sunvisor body, for example, by the use of clips or snaps, by the use of adhesive, or by using other known attaching means.

Particularly figure 1 shows the vanity mirror assembly (10) in a position in which the lid (14), which covers the vanity mirror (2) when it is not in use, is opened. However, the lid (14) is not an essential part of the invention.

Normally, the opening of the lid (14) activates the lighting device (3) which forms part of the vanity mirror assembly (10). Figure 1 represents a hinged lid, however a sliding lid could be compatible with the invention, since the way in which the lid (14) is opened does not affect the essence of the invention.

On the other hand, the lighting device (3) could also be activated when the sunvisor (20) being in a stowed position, adopts the use position.

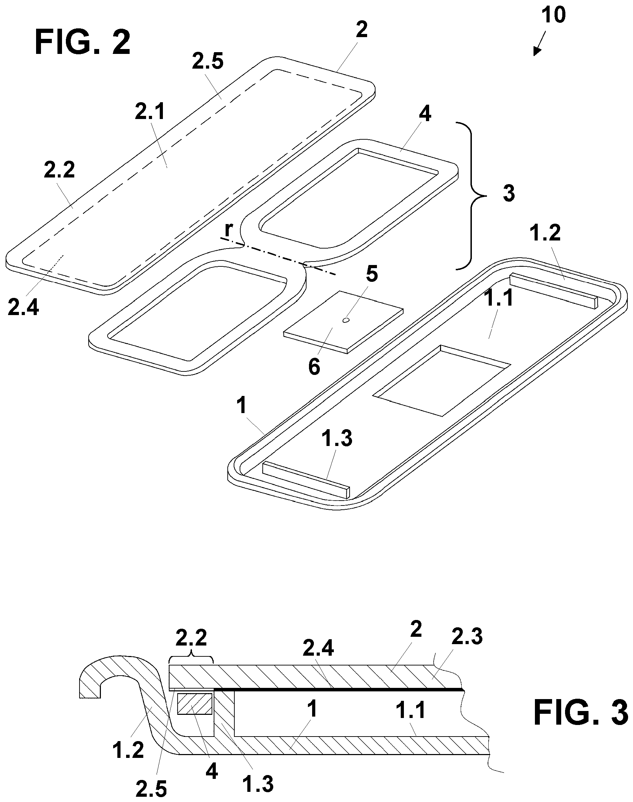

As for example figures 2-5 show, the vehicle sunvisor (20) with a vanity mirror assembly (10) having a lighting device (3) according to the invention comprises:
- a supporting carrier (1) configured to be attached to a sunvisor (20) body,
- a vanity mirror (2) having a main surface (2.1) and being attached to the supporting carrier (1), wherein the vanity mirror (2) defines a vanity mirror peripheral area (2.2), and a vanity mirror surrounding area (7) configured to emit the light to the outside of the vanity mirror assembly (10), and
- a lighting device (3) housed in the supporting carrier (1) and covered by the vanity mirror (2) .

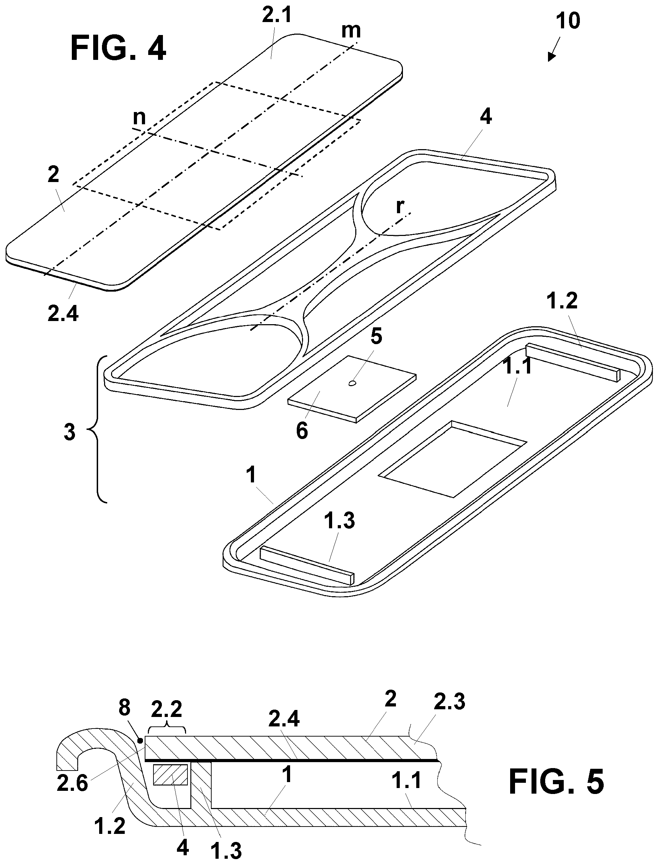

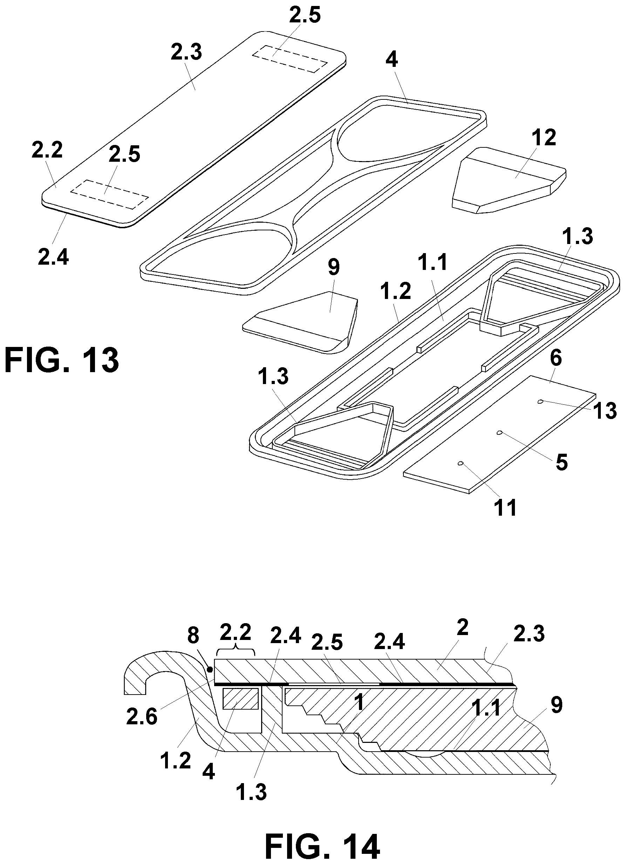

According to the configurations represented in the figures 5 and 14, the vanity mirror surrounding area (7) is configured by a gap (8) between a perimeter edge (2.6) of the vanity mirror (2) and a perimeter wall (1.2) of the supporting carrier (1).

Instead of the perimeter wall (1.2) of the supporting carrier (1) represented in figures 5 and 14, any wall forming the vehicle sunvisor (20), or the vanity mirror assembly (10) and being able to redirect the light emitted by the lighting device (3) to the outside of the vanity mirror (2) is considered by the invention.

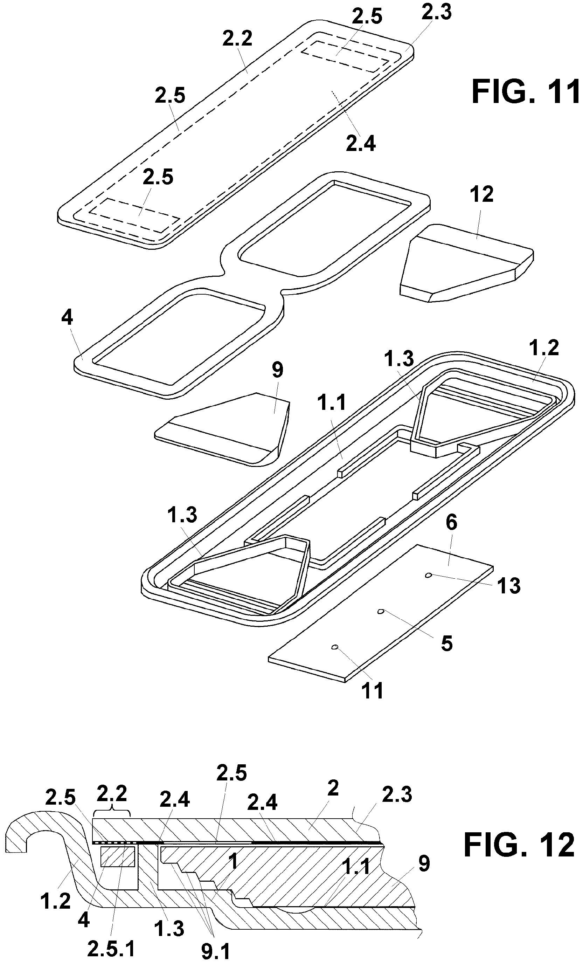

According to the configurations represented in the figures 3 and 12, the vanity mirror surrounding area (7) coincides with the vanity mirror peripheral area (2.2) in such a way that the light is emitted directly through the vanity mirror (2).

According this particular case, as it is described below, the vanity mirror (2) is configured to allow the light passes through it in order to reach the outside of the vanity mirror assembly (10).

The supporting carrier (1) is configured to be attached to a sunvisor (20) body. It forms the component of the vanity mirror assembly (10) which supports the whole assembly.

The supporting carrier (1) can comprise a main wall (1.1), and a peripheral wall (1.2).

The main wall (1.1) is parallel to the main surface (2.1) of the vanity mirror (2) in such a way that it forms the bottom wall of the supporting carrier (1) .

The peripheral wall (1.2) is projected perpendicularly from the main wall (1.1) along its perimeter.

Optionally, the supporting carrier (1) can comprise at least a vertical wall (1.3) projecting perpendicularly from the main wall (1.1).

Said vertical wall (1.3) can be configured to provide attachment areas of the vanity mirror (2) to the supporting carrier (1).

In addition, said vertical wall (1.3) can be configured as light separating wall avoiding the light emitted by different light guides (4, 9, 12) is mixed, according to particular configurations described below.

According to the configurations represented in the figures 11 and 13, the vertical walls (1.3) are projected perpendicularly from the main wall (1.1) along the contour of the second and third light guides (9, 12) .

In order to provide a maximum utilization of the light emitted by the lighting device, the supporting carrier (1) can be covered with a coating (not represented) being able to reflect the light which escapes from the light guides (4, 9, 12) in order to reintroducing again the light inside the light guide (4, 9, 12). It can be for example a white coating or a coating comprising additives being able to reflect the light received.

The coating can be replaced with a supporting carrier (1) made of a plastic material able to reflect the light received, for example a white plastic material or any plastic material comprising additives being able to reflect the light received.

The vanity mirror (2) is the second main component of the vanity mirror assembly (10).

It is attached to the supporting carrier (1), for example by adhesive.

As it has been described above, the vanity mirror (2) can be attached to the supporting carrier (1) by the vertical walls (1.3).

Preferably said vertical walls (1.3) wherein the vanity mirror (2) is supported and attached, are configured in such a way that there is no contact between the light guides (4, 9, 12) and the vanity mirror (2) in order to not hinder the light distribution inside the light guides (4, 9, 12).

As figure 4 shows, the main surface (2.1) of the vanity mirror (2) has two main axes, a major axis "m" and a minor axis "n".

Normally the vanity mirror (2) has a rectangular shape, but other different shapes are considered by the present invention as an elliptical shape.

According to an advantageous configuration in which the occupied space by the assembly along a perpendicular direction to the main surface (2.1) of the vanity mirror (2) is further reduced, the vanity mirror (2) can comprise a transparent plate (2.3), a mirror plating reflecting area (2.4), and at least a transparent window (2.5).

In this way the light emitted by the lighting device (3) can be directly emitted through the vanity mirror (2), particularly through light exists formed by the transparent window or windows (2.5) in such a way that the use of additional parts particularly configured for the light emission from the lighting device (3) to the outside of the vanity mirror assembly (20), normally voluminous parts, is avoided.

Said transparent windows (2.5) can be configured by selectively removing the reflecting material which configures the plating reflecting area (2.4) or by selectively plating the reflecting material in such a way that the areas configured to define the transparent windows (2.5) are free of reflecting material.

Said reflecting material can comprise for example silver.

According to the particular configuration represented in the figure 2, the transparent window (2.5) surrounds the perimeter of the vanity mirror (2), therefore, the light is able to be emitted through the vanity mirror peripheral area (2.2).

According to the particular configuration represented in the figure 13, the vanity mirror (2) comprises two transparent windows (2.5) extended at the ends of the vanity mirror (2).

According to the particular configuration represented in the figure 11, the vanity mirror (2) comprises two transparent windows (2.5) extended at the ends of the vanity mirror (2) and a transparent window (2.5) surrounding the perimeter of the vanity mirror (2) .

Although some particular configurations of the transparent windows (2.5) have been represented in the figures 2, 11 and 13, the present invention is not limited to a particular shape or number of transparent windows (2.5).

According to a particular configuration of the invention, the transparent windows (2.5) described above can comprise light exit modulating means (2.5.1) in order to improve the homogeneity of the light emission through and along the entire surface of themselves. Said light exit modulating means (2.5.1) can comprise for example reflecting dots.

The distribution of said light exit modulating means (2.5.1) can vary as they are separated from the light source in order to achieve a homogeneous light emission.

The light exit modulating means (2.5.1) can be configured for example by selectively removing the reflecting material which configures the plating reflecting area (2.4) of the vanity mirror (2) or by selectively plating the reflecting material.

The removal of the reflecting material can be carry out for example by laser.

Additionally, the present invention also considers other ways to configure the light exits in such a way they can be formed by additional parts through which the light can be emitted.

The last main component which forms part of the vanity mirror assembly (10) is the lighting device (3).

It is housed in the supporting carrier (1) and covered by the vanity mirror (2) according to a parallel disposition with regard to the vanity mirror (2) main surface (2.1). It means that the main components forming the lighting device (3), namely the first light guide (3) and the printed circuit board (6) described below, have their main surfaces parallel to the main surface (2.1) of the vanity mirror (2).

The main function of the lighting device (3) is to uniformly emit light to the outside of the vanity mirror assembly (10), particularly over the vanity mirror surrounding area (7).

Depending on the particular configuration of the vanity mirror assembly (10), the lighting device (3) can emit functional light, decorative light, or both at the same time.

The lighting device (3) comprises:
o a first light guide (4) configured to emit light over the vanity mirror surrounding area (7),
o a first light source (5) comprising a LED configured to inject light inside the first light guide (4), and
o a printed circuit board (6) parallel to the main surface (2.1) of the vanity mirror (2) and attached to the supporting carrier (1), and wherein the first light source (5) is attached.

The main surface of the first light guide (4) comprise two main axes "s" and "t".

The main surface of the first light guide (4) is parallel to the main surface (2.1) of the vanity mirror (2), that is, the first light guide (4) is mainly extended over a parallel surface to the main surface (2.1) of the vanity mirror (2).

The first light guide comprises a frontal edge (4.3) facing the vanity mirror (2), a rear edge (4.4) opposite to the frontal edge (4.3), and a side edge (4.5) connecting the frontal edge (4.3) and the rear edge (4.4). In turn, the side edge (4.5) comprises an exterior side (4.5.1) facing the exterior of the first light guide (4) and an interior side (4.5.2) facing the interior thereof.

Preferably, the first light guide (4) has a reduced thickness compared to its extension over its main surface.

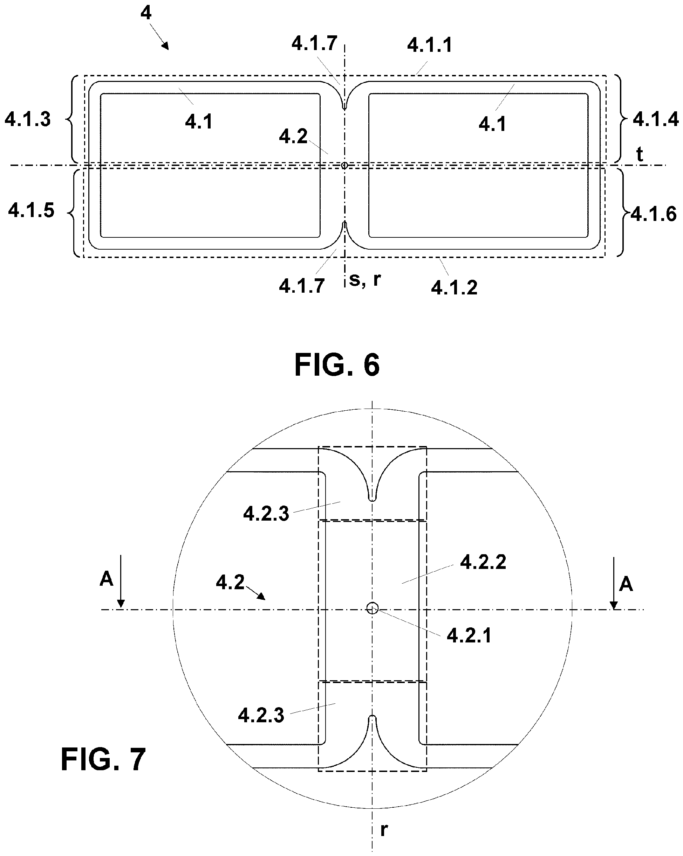

The first light guide (4), as figure 6 shows, comprises a light emission part (4.1) and a light distribution part (4.2).

Particularly, the light emission part (4.1) has a ring shape which it is extended along the vanity mirror peripheral area (2.2), and the light distribution part (4.2) is located in the free space defined by the ring shape of the light emission part (4.1), in such a way both parts (4.1, 4.2) are connected.

Preferably, said first light guide (4) is configured by a single plastic part, that is, the light emission part (4.1) and the light distribution part (4.2) form a single part.

The light distribution part (4.2) has a longitudinal main axis "r" being parallel to the main surface (2.1) of the vanity mirror (2).

In the particular case in which the first light guide (4) is symmetrical, the axis "r" of the light distribution part (4.1) can coincide with any of the main axes ("s", "t") of the first light guide (4).

According to the embodiment represented in the figures 2, 6, 7 and 11 for example, the longitudinal main axis "r" of the light distribution part (4.2) is parallel to the minor axis "n" of the main surface (2.1) of the vanity mirror (1).

According to this particular case, the light distribution part (4.2) divides the light emission part (4.1) into two portions.

According to the embodiment represented in the figures 4 and 13, the longitudinal main axis "r" of the light distribution part (4.2) is parallel to major axis "m" of the main surface (2.1) of the vanity mirror (2).

The light distribution part (4.2) is configured to distribute the light emitted by the first light source (5) towards the light emission part (4.1).

Particularly the light distribution part (4.2) comprises a light injection point (4.2.1), a first light distribution portion (4.2.2), and two second light distribution portions (4.2.3).

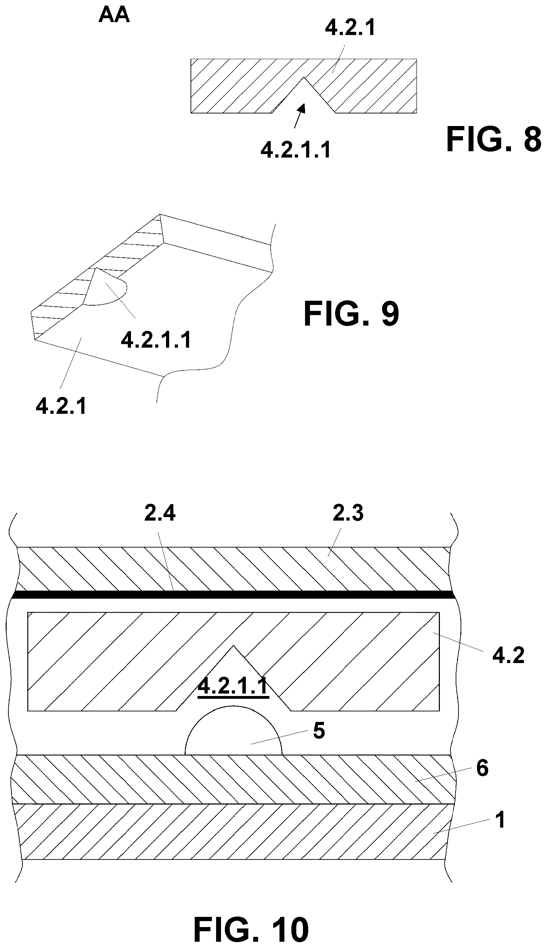

The light injection point (4.2.1), as figure 10 shows, is in correspondence with the first light source (5) and it comprises light spreading means (4.2.1.1).

Particularly, the light injection point (4.2.1) is in the interior space defined by the ring shape of the light emission part (4.1) and it does not coincide with light emission part (4.1).

According to a particular case of the invention, the light injection point (4.2.1) coincides with the center "O" defined by the main axes "s" and "t" of the first light guide (4) as figure 7 shows.

The light spreading means (4.2.1.1) catch the light emitted by the first light source (5) and evenly enters said light inside the first light guide (4).

According to a configuration represented in the figure 8, the light spreading means (4.2.1.1) comprise two slopped planes.

According to a configuration represented in the figure 9, the light spreading means (4.2.1.1) comprise a conical shape which allow entering the light received by the first light source (5) even more evenly inside the first light guide (4).

According to the configuration shown un the figure 7, the first light distribution portion (4.2.2) distributes the light received by the light injection point (4.2.1) towards the two halves (4.1.1, 4.1.2) of the light emission part (4.1) described below, particularly it distributes the light between the two second distribution portions (4.2.3) placed at opposite sides of the first light distribution portion (4.2.2), as said figure 7 shows.

The two second light distribution portions (4.2.3) each one is configured to distribute and to redirect the light over the two quarters (4.1.3, 4.1.4, 4.1.5, 4.1.6) described below of the light emission part (4.1). Both second distribution portions (4.2.3) are placed at opposite sides of the first light distribution portion (4.2.2).

As it has been described above, the light emission part (4.1), as for example figure 6 shows, has a ring shape which it is extended along the vanity mirror peripheral area (2.2) and it is configured to emit light over the mirror surrounding area (7).

As figure 6 shows, the ring shape can have discontinuities (4.1.7) along its path. The discontinuities have a V-shape at the connection portions between the light emission part (4.1) and the light distribution part (4.2). The invention also considers a configuration in which there is no discontinuities at the connection portions between the light emission part (4.1) and the light distribution part (4.2).

The light effect achieved by the light emission part (4.1) as a whole does not necessarily be affected by said discontinuities (4.1.7) in such a way that the first light guide (4) is able to uniformly emit light along the total length of the vanity mirror surrounding area (7).

According to the configurations shown in the figures 4 and 13, the light emission part (4.1) has not discontinuities at the connection portions between the light emission part (4.1) and the light distribution part (4.2).

As figure 6 shows, the light emission part (4.1) comprises two halves, a first half (4.1.1), and a second half (4.1.2). For the sake of clarity, said halves (4.1.1, 4.1.2) have been framed by discontinuous lines forming rectangular shapes.

Each half (4.1.1, 4.1.2) in turn is divided into two quarters, the first half (4.1.1) is divided into a first quarter (4.1.3), and a second quarter (4.1.4), and the second half (4.1.2) is divided into a third quarter (4.1.5), and a fourth quarter (4.1.6). For the sake of clarity, said quarters have been identified by curly brackets.

Particularly, the first half (4.1.1) and the second half (4.1.2) are separated by the axis "t" perpendicular to the longitudinal main axis "r" of the light distribution part (4.2).

The light emission part (4.1) further comprises light extracting means (4.1.9) distributed over the light emission part (4.1) and configured to uniformly emit the light received by light distribution part (4.2), through the light vanity mirror surrounding area (7) .

It means that they are preferably configured to compensate the reduction of the available light as they are separated from the light source due to the fact that, as the light is being extracted outside of the first light guide (4), the total amount of available light to be transmitted along the remaining portion of the first light guide (4) gradually decreases.

Therefore, the light extracting capacity of the light extracting means (4.1.9) preferably increases as the distance from the light source (5) does.

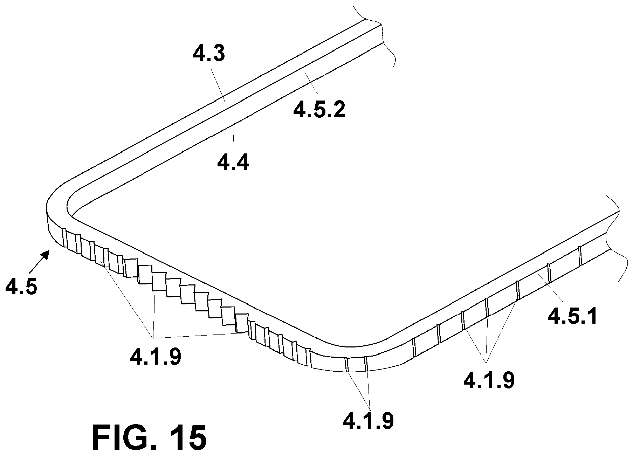

In this way the portion of the light emission part (4.1) being further away from the light distribution part (4.2) along the path formed by the light emission part (4.1), has a light extracting capacity greater than the portion of the light emission part (4.1) being closer to the light distribution part (4.2), as for example figure 15 shows.

According to the configuration represented in the figure 6, the portion of the light emission part (4.1) being further away from the light distribution part (4.2) and having a greater light extracting capacity is the portion of the light emission part (4.1) around the axis "t" of the first light guide (4), as figure 6 represents, that is, the portion between the first quarter (4.1.3) and the third quarter (4.1.5), and the portion between the second quarter (4.1.4) and the fourth quarter (4.1.6).

According to the particular case in which the vanity mirror surrounding area (7) is configured by the gap (8), the light extracting means (4.1.9) are configured to emit light through the exterior side (4.5.1) of the side edge (4.5) of the first light guide (4) .

Particularly in this case, the light extracting means (4.1.9) are provided on either side of the side edge (4.5) of the first light guide (4), namely the exterior side (4.5.1) or the interior side (4.5.2) of said side edge (4.5).

In the example represented in the figure 15, the light extracting means (4.1.9) are provided on the exterior side (4.5.1) of the said edge (4.5), that is, on the side through which the light exits to the outside of the first light guide (4).

As the example of figure 15 shows, the shape and/or the distribution of the light extracting means (4.1.9) varies as they are separated from the light source in order to the light extracting capacity of said light extracting means (4.1.9) increases as the distance from the light source (5) does.

Said light extracting means (4.1.9) can comprise for example protrusions, cavities or deposited additional material.

As already mentioned above, other particular case considered by the present invention is that in which the vanity mirror surrounding area (7) coincides with the vanity mirror peripheral area (2.2) in such a way that the light is emitted directly through the vanity mirror (2). According this particular case, the light extracting means (4.1.9) are configured to emit light through the frontal edge (4.3) of the first light guide (4).

Particularly in this case, the light extracting means (4.1.9) are provided either on the frontal edge (4.3) or on the rear edge (4.4) of the first light guide (4) .

According to this particular case the light extracting means (4.1.9) can be provided in a bevelled portion between the frontal edge (4.3) and the rear edge (4.4) of the first light guide (4).

As the above configuration described, the shape and/or the distribution of the light extracting means (4.1.9) can vary as they are separated from the light source in order to the light extracting capacity of said light extracting means (4.1.9) increases as the distance from the light source (5) does.

As the above configuration described, the light extracting means (4.1.9) can comprise for example protrusions, cavities or deposited additional material.

On the other hand, according to this particular case, the transparent window (2.5) configured in the vanity mirror (2) can comprise light exit modulating means (2.5.1), as it has been described above, in order to control the amount of light emitted through the transparent window (2.5), so that the light emitted is homogeneous along the entire surface of the transparent window (2.5).

According to an optional case of the present invention represented in the figures 11 and 13, the lighting device (3) comprise more light guides (9, 12) in addition to the first light guide (4).

Due to the particular ring shape configuration of light emission part (4.1), the lighting device (3) of the present invention allows providing additional light guides without increasing the total space occupied by the whole assembly.

The second and a third (9, 12) light guides are placed in the spaces formed between the light emission part (4.1) and the light distribution part (4.2). The present invention also considers a lighting device (3) having only one of the two additional light guides (9, 12) .

The second light guide (9) is configured to emit light through the vanity mirror (2). Said second light guide (9) is optically connected to a second LED (11) configured to inject light inside the second light guide (9). The second light guide (9) comprises second light extracting means in order to emit the light received by the second LED (11) and distributed over the second light guide (9) body.

In order to said light transmitted and distributed by the second light guide (9) can be emitted through the vanity mirror (2), said vanity mirror (2) can comprise transparent windows (2.3) in correspondence with the extracting area of the second light guide (9).

The second light guide (9) is housed in the interior space formed between the light emission part (4.1) and the light distribution part (4.2) of the first light guide (4).

In order to avoid the light emitted by the first light guide (4) is mixed with the light emitted by the second light guide (9), as it has been described above, the supporting carrier (1) can comprise a vertical wall (1.3) configured to said propose.

Particularly in the configurations represented in the figures 11 and 13, the supporting carrier (1) comprises two vertical walls (1.3), a first vertical wall (1.3) surrounding a second light guide (9) and a second vertical wall (1.3) surrounding a third light guide (12). In this way the light emitted by the second light guide (9) and the third light guide (12) is not mixed with the light emitted by the first light guide (4) .

According to a preferred option, the second LED (11) is connected to the printed circuit board (6) wherein the first LED (5) is connected.

According to a preferred option, the second light guide (9) has a triangular prism shape. Said second light guide (9) also comprises a light extracting means (9.1) configured to emit light through the vanity mirror (2). The present invention also considers an option in which the light emitted by the second light guide (9) is emitted by an additional transparent part added to the vanity mirror assembly (10).

The third light guide (12), as the second light guide (9), is configured to emit light through the vanity mirror (2). Said third light guide (12) is optically connected to a third LED (13) configured to inject light inside the third light guide (12).

The particular features of the third light guide (12) and the third LED (13) and their relationship with the vanity mirror assembly (10) can be the same as the second light guide (9) and the second LED (11).

According to a preferred configuration shown in the figure 13, the lighting device (3) comprises a first light guide (4) and a second light guide (9) or a second light guide (9) and a third light guide (12), the light emitted by the first light guide (4) is carried out through the gap (8) between the perimeter of the vanity mirror (2) and a perimeter wall (1.2) of the supporting carrier (1) or other wall forming the sunvisor (20) with the same function, and the light emitted by the second light guide (9) or by the second light guide (9) and the third light guide (12) is carried out through transparent windows (2.5) provided in the vanity mirror (2), or through added transparent parts continuing the vanity mirror (2) along its main surface.

The invention also considers a configuration in which the light emitted by first light guide (4) and a second light guide (9) or a second light guide (9) and a third light guide (12), is carried out through the vanity mirror (2) as figure 11 shows, by providing transparent windows (2.5) adapted to allow emitting the light corresponding to each light guide (4, 9, 12).

According to other particular configuration of the invention, any of the light guides described (4, 9, 12) can comprise light diffusing means (not represented) being directly in the side of said light guides (4, 9, 12) through which the light is emitted.

According to this particular configuration, the light diffusing means can be configured by applying an additional material over the light guide, for example by screen-printing, or by removing part of the material forming the light guide in such a way that several discontinuities capable to diffuse the light are formed, for example by laser.

Regarding the first light source (5), it comprises only one LED, and it is configured to inject light inside the first light guide (4).

The LED preferably is a front emission LED in order to be able to distribute uniformly over the first light distribution area (4.2) of the first light guide (4) .

Regarding the second and third light sources (11, 13) collaborating with the second and the third light guide (9, 12) respectively, they can comprise both, a frontal emission LED or a lateral emission LED.

The invention is not limited to the different combinations of the lighting device (3), the vanity mirror (2) and the supporting carrier (1) represented in the figures in such a way that the invention considers other combinations not represented. The scope of protection is defined only by the appended claims.

## Claims

1. Vehicle sunvisor (20) with a vanity mirror assembly (10) having a lighting device (3), wherein the vanity mirror assembly (10) comprises:
- a supporting carrier (1) configured to be attached to a sunvisor (20) body,
- a vanity mirror (2) having a main surface (1.1), and being attached to the supporting carrier (1), wherein the vanity mirror (2) defines a vanity mirror peripheral area (2.2), and a vanity mirror surrounding area (7) configured to emit the light to the outside of the vanity mirror assembly (10),
- a lighting device (3) housed between the supporting carrier (1) and the vanity mirror (2), wherein the lighting device (3) comprises:
o a first light guide (4) configured to emit light over the vanity mirror surrounding area (7), wherein the first light guide (4) comprises a main surface parallel to the main surface (2.1) of the vanity mirror (2) having two main axes s and t, wherein the first light guide (4) comprises a frontal edge (4.3) facing the vanity mirror (2), a rear edge (4.4) opposite to the frontal edge (4.3), and a side edge (4.5) connecting the frontal edge (4.3) and the rear edge (4.4), wherein the side edge (4.5) comprises an exterior side (4.5.1) facing the exterior of the first light guide (4) and an interior side (4.5.2) facing the interior thereof,
o a first light source (5) comprising a LED configured to inject light inside the first light guide (4), and
o a printed circuit board (6) parallel to the main surface (1.1) of the vanity mirror (2) and attached to the supporting carrier (1), wherein the first light source (5) is attached, wherein the first light source (5) comprises only one LED,
**characterized in that** the first light guide (4) comprises a light emission part (4.1) having a ring shape which it is extended along the vanity mirror peripheral area (2.2), wherein said light emission part (4.1) is configured to emit light over the mirror surrounding area (7), and a light distribution part (4.2) which is located in the free space defined by the ring shape of the light emission part (4.1), in such a way both parts (4.1, 4.2) are connected, wherein said light distribution part (4.2) is configured to distribute the light emitted by the first light source (5) towards the light emission part (4.1) and,
wherein the light distribution part (4.1) has a longitudinal main axis r and it comprises:
- a light injection point (4.2.1) in correspondence with the first light source (5) comprising light spreading means (4.2.1.1),
- a first light distribution portion (4.2.2) configured to distribute the light towards two halves (4.1.1, 4.1.2) of the light emission part (4.1),
- and two second light distribution portions (4.2.3) each one is configured to distribute the light over two quarters (4.1.3, 4.1.4, 4.1.5, 4.1.6) of the light emission part (4.1),
wherein the light emission part (4.1) comprises light extracting means (4.1.9) distributed over the light emission part (4.1) surface and configured to uniformly emit the light received by light distribution part (4.2), through the light vanity mirror surrounding area (7).

2. Vehicle sunvisor (20) with a vanity mirror assembly (10) having a lighting device (3) according to claim 1 wherein the light spreading means (4.2.1.1) comprises a conical shape.

3. Vehicle sunvisor (20) with a vanity mirror assembly (10) having a lighting device (3) according to claim 1 wherein the light spreading means (4.2.1.1) comprises a two slopped planes.

4. Vehicle sunvisor (20) with a vanity mirror assembly (10) having a lighting device (3) according to claim 1 wherein the main surface (2.1) of the vanity mirror (2) has two main axes, a major axis m and a minor axis n, and wherein the longitudinal main axis r of the light distribution part (4.2) is parallel to the minor axis n.

5. Vehicle sunvisor (20) with a vanity mirror assembly (10) having a lighting device (3) according to claim 1, wherein the vanity mirror (2) comprises a transparent plate (2.3), a mirror plating reflecting area (2.4), and a transparent window (2.5).

6. Vehicle sunvisor (20) with a vanity mirror assembly (10) having a lighting device (3) according to claim 1 wherein the vanity mirror surrounding area (7) is configured by a gap (8) between the perimeter of the vanity mirror (2) and a perimeter wall (1.2) of the supporting carrier (1) or by a gap (8) between the perimeter of the vanity mirror (2) and wall of the sunvisor (20) body.

7. Vehicle sunvisor (20) with a vanity mirror assembly (10) having a lighting device (3) according to claim 6 wherein light extracting means (4.1.9) are configured to emit light through the exterior side (4.5.1) of the side edge (4.5) of the first light guide (4) .

8. Vehicle sunvisor (20) with a vanity mirror assembly (10) having a lighting device (3) according to claim 1 wherein the vanity mirror surrounding area (7) coincides with the vanity mirror peripheral area (2.2) in such a way that the light is emitted through the vanity mirror (2).

9. Vehicle sunvisor (20) with a vanity mirror assembly (10) having a lighting device (3) according to claim 8 wherein the vanity mirror (2) comprises a peripheral transparent window (2.5) over the vanity mirror peripheral area (2.2).

10. Vehicle sunvisor (20) with a vanity mirror assembly (10) having a lighting device (3) according to claim 8 wherein the light extracting means (4.1.9) are configured to emit light through the frontal edge (4.3) of the first light guide (4).

11. Vehicle sunvisor (20) with a vanity mirror assembly (10) having a lighting device (3) according to claim 1 wherein the lighting device (3) comprises a second light guide (9) configured to emit light through the vanity mirror (2) and a second LED (11) configured to inject light inside the second light guide (9).

12. Vehicle sunvisor (20) with a vanity mirror assembly (10) having a lighting device (3) according to claim 11 wherein the lighting device (3) comprises a third light guide (12) configured to emit light through the vanity mirror (2) and a third LED (13) configured to inject light inside the third light guide (12) .

13. Vehicle sunvisor (20) with a vanity mirror assembly (10) having a lighting device (3) according to claims 11 or 12 wherein the second LED (11) is mounted on the printed circuit board (6) wherein the first LED (5) is mounted, or the second LED (11) and the third LED (13) are mounted on the printed circuit board (6) wherein the first LED (5) is mounted.

14. Vehicle sunvisor (20) with a vanity mirror assembly (10) having a lighting device (3) according to any claim 11 to 13 wherein the supporting carrier (1) comprises a main wall (1.1) parallel to the main surface (2.1) of the vanity mirror (2) and a vertical wall (1.3) between the first light guide (4) and the second light guide (9), or between the first light guide (4) and the second light guide (9) and between the first light guide (4) and the third light guide (12), wherein the vertical wall (1.3) is configured to avoid the light injected in the first light guide (4) is mixed with the light injected in the second light guide (9) and with the light injected in the third light guide (12).

15. Vehicle sunvisor (20) with a vanity mirror assembly (10) having a lighting device (3) according to claim 5 wherein the transparent window (2.5) comprise light exit modulating means (2.5.1) in order to improve the homogeneity of the light emission through and along the entire surface of itself.

## Patentansprüche

1. Fahrzeugsonnenblende (20) mit einer Schminkspiegelanordnung (10) mit einer Beleuchtungsvorrichtung (3), wobei die Schminkspiegelanordnung (10) umfasst:
- einen Stützträger (1), der dazu konfiguriert ist, an einem Körper einer Sonnenblende (20) befestigt zu werden,
- einen Schminkspiegel (2), der eine Hauptfläche (1.1) aufweist und an dem Stützträger (1) befestigt ist, wobei der Schminkspiegel (2) einen Schminkspiegel-Umfangsbereich (2.2) und einen Schminkspiegel-Umgebungsbereich (7) definiert, der dazu konfiguriert ist, das Licht zur Außenseite der Schminkspiegelanordnung (10) zu emittieren,
- eine Beleuchtungsvorrichtung (3), die zwischen dem Stützträger (1) und dem Schminkspiegel (2) untergebracht ist, wobei die Beleuchtungsvorrichtung (3) umfasst:
o einen ersten Lichtleiter (4), der dazu konfiguriert ist, Licht über den Schminkspiegel-Umgebungsbereich (7) zu emittieren, wobei der erste Lichtleiter (4) eine Hauptfläche parallel zur Hauptfläche (2.1) des Schminkspiegels (2) mit zwei Hauptachsen s und t umfasst, wobei der erste Lichtleiter (4) eine dem Schminkspiegel (2) zugewandte Vorderkante (4.3), eine der Vorderkante (4.3) gegenüberliegende Hinterkante (4.4) und eine Seitenkante (4.5), die die Vorderkante (4.3) und die Hinterkante (4.4) verbindet, umfasst, wobei die Seitenkante (4.5) eine dem Äußeren des ersten Lichtleiters (4) zugewandte Außenseite (4.5.1) und eine dem Inneren davon zugewandte Innenseite (4.5.2) umfasst,
o eine erste Lichtquelle (5), die eine LED umfasst, die dazu konfiguriert ist, Licht in den ersten Lichtleiter (4) einzukoppeln, und
o eine Leiterplatte (6), die parallel zur Hauptfläche (1.1) des Schminkspiegels (2) ist und an dem Stützträger (1) befestigt ist, an dem die erste Lichtquelle (5) befestigt ist, wobei die erste Lichtquelle (5) nur eine LED umfasst,
**dadurch gekennzeichnet, dass** der erste Lichtleiter (4) einen Lichtemissionsteil (4.1) mit einer Ringform, der sich entlang des Schminkspiegel-Umfangsbereichs (2.2) erstreckt, wobei der Lichtemissionsteil (4.1) dazu konfiguriert ist, über den Spiegelumgebungsbereich (7) Licht zu emittieren, und einen Lichtverteilungsteil (4.2) umfasst, der in dem durch die Ringform des Lichtemissionsteils (4.1) definierten Freiraum derart angeordnet ist, dass beide Teile (4.1, 4.2) verbunden sind, wobei der Lichtverteilungsteil (4.2) dazu konfiguriert ist, das von der ersten Lichtquelle (5) emittierte Licht in Richtung des Lichtemissionsteils (4.1) zu verteilen, und
wobei das Lichtverteilungsteil (4.1) eine Hauptlängsachse r aufweist und umfasst:
- einen Lichteinkopplungspunkt (4.2.1) in Übereinstimmung mit der ersten Lichtquelle (5), der Lichtstreumittel (4.2.1.1) umfasst,
- einen ersten Lichtverteilungsabschnitt (4.2.2), der dazu konfiguriert ist, das Licht in Richtung von zwei Hälften (4.1.1, 4.1.2) des Lichtemissionsteils (4.1) zu verteilen,
- und zwei zweite Lichtverteilungsabschnitte (4.2.3), von denen jeder dazu konfiguriert ist, das Licht über zwei Viertel (4.1.3, 4.1.4, 4.1.5, 4.1.6) des Lichtemissionsteils (4.1) zu verteilen,
wobei das Lichtemissionsteil (4.1) Lichtextraktionsmittel (4.1.9) umfasst, die über die Fläche des Lichtemissionsteils (4.1) verteilt und dazu konfiguriert sind, das vom Lichtverteilungsteil (4.2) empfangene Licht gleichmäßig durch den Lichtschminkspiegel-Umgebungsbereich (7) zu emittieren.

2. Fahrzeugsonnenblende (20) mit einer Schminkspiegelanordnung (10) mit einer Beleuchtungsvorrichtung (3) nach Anspruch 1, wobei das Lichtstreumittel (4.2.1.1) eine konische Form umfasst.

3. Fahrzeugsonnenblende (20) mit einer Schminkspiegelanordnung (10) mit einer Beleuchtungsvorrichtung (3) nach Anspruch 1, wobei das Lichtstreumittel (4.2.1.1) zwei geneigte Ebenen umfasst.

4. Fahrzeugsonnenblende (20) mit einer Schminkspiegelanordnung (10) mit einer Beleuchtungsvorrichtung (3) nach Anspruch 1, wobei die Hauptfläche (2.1) des Schminkspiegels (2) zwei Hauptachsen aufweist, eine große Achse m und eine kleine Achse n, und wobei die Hauptlängsachse r des Lichtverteilungsteils (4.2) parallel zur kleinen Achse n ist.

5. Fahrzeugsonnenblende (20) mit einer Schminkspiegelanordnung (10) mit einer Beleuchtungsvorrichtung (3) nach Anspruch 1, wobei der Schminkspiegel (2) eine transparente Platte (2.3), einen Spiegelbeschichtungs-Reflexionsbereich (2.4) und ein transparentes Fenster (2.5) umfasst.

6. Fahrzeugsonnenblende (20) mit einer Schminkspiegelanordnung (10) mit einer Beleuchtungsvorrichtung (3) nach Anspruch 1, wobei der Schminkspiegel-Umgebungsbereich (7) durch einen Spalt (8) zwischen dem Umfang des Schminkspiegels (2) und einer Umfangswand (1.2) des Stützträgers (1) oder durch einen Spalt (8) zwischen dem Umfang des Schminkspiegels (2) und einer Wand des Körpers der Sonnenblende (20) konfiguriert ist.

7. Fahrzeugsonnenblende (20) mit einer Schminkspiegelanordnung (10) mit einer Beleuchtungsvorrichtung (3) nach Anspruch 6, wobei Lichtextraktionsmittel (4.1.9) dazu konfiguriert sind, Licht durch die Außenseite (4.5.1) der Seitenkante (4.5) des ersten Lichtleiters (4) zu emittieren.

8. Fahrzeugsonnenblende (20) mit einer Schminkspiegelanordnung (10) mit einer Beleuchtungsvorrichtung (3) nach Anspruch 1, wobei der Schminkspiegel-Umgebungsbereich (7) derart mit dem Schminkspiegel-Umfangsbereich (2.2) zusammenfällt, dass das Licht durch den Schminkspiegel (2) emittiert wird.

9. Fahrzeugsonnenblende (20) mit einer Schminkspiegelanordnung (10) mit einer Beleuchtungsvorrichtung (3) nach Anspruch 8, wobei der Schminkspiegel (2) ein transparentes Umfangsfenster (2.5) über dem Schminkspiegel-Umfangsbereich (2.2) umfasst.

10. Fahrzeugsonnenblende (20) mit einer Schminkspiegelanordnung (10) mit einer Beleuchtungsvorrichtung (3) nach Anspruch 8, wobei Lichtextraktionsmittel (4.1.9) dazu konfiguriert sind, Licht durch die Vorderkante (4.3) des ersten Lichtleiters (4) zu emittieren.

11. Fahrzeugsonnenblende (20) mit einer Schminkspiegelanordnung (10) mit einer Beleuchtungsvorrichtung (3) nach Anspruch 1, wobei die Beleuchtungsvorrichtung (3) einen zweiten Lichtleiter (9), der dazu konfiguriert ist, Licht durch den Schminkspiegel (2) zu emittieren, und eine zweite LED (11) umfasst, die dazu konfiguriert ist, Licht in den zweiten Lichtleiter (9) einzukoppeln.

12. Fahrzeugsonnenblende (20) mit einer Schminkspiegelanordnung (10) mit einer Beleuchtungsvorrichtung (3) nach Anspruch 11, wobei die Beleuchtungsvorrichtung (3) einen dritten Lichtleiter (12), der dazu konfiguriert ist, Licht durch den Schminkspiegel (2) zu emittieren, und eine dritte LED (13) umfasst, die dazu konfiguriert ist, Licht in den dritten Lichtleiter (12) einzukoppeln.

13. Fahrzeugsonnenblende (20) mit einer Schminkspiegelanordnung (10) mit einer Beleuchtungsvorrichtung (3) nach Anspruch 11 oder 12, wobei die zweite LED (11) auf der Leiterplatte (6) montiert ist, auf der die erste LED (5) montiert ist, oder die zweite LED (11) und die dritte LED (13) auf der Leiterplatte (6) montiert sind, auf der die erste LED (5) montiert ist.

14. Fahrzeugsonnenblende (20) mit einer Schminkspiegelanordnung (10) mit einer Beleuchtungsvorrichtung (3) nach einem der Ansprüche 11 bis 13, wobei der Stützträger (1) eine Hauptwand (1.1) parallel zur Hauptfläche (2.1) des Schminkspiegels (2) und eine vertikale Wand (1.3) zwischen dem ersten Lichtleiter (4) und dem zweiten Lichtleiter (9) oder zwischen dem ersten Lichtleiter (4) und dem zweiten Lichtleiter (9) und zwischen dem ersten Lichtleiter (4) und dem dritten Lichtleiter (12) umfasst, wobei die vertikale Wand (1.3) dazu konfiguriert ist, zu vermeiden, dass das in den ersten Lichtleiter (4) eingekoppelte Licht mit dem in den zweiten Lichtleiter (9) eingekoppelten Licht und mit dem in den dritten Lichtleiter (12) eingekoppelten Licht vermischt wird.

15. Fahrzeugsonnenblende (20) mit einer Schminkspiegelanordnung (10) mit einer Beleuchtungsvorrichtung (3) nach Anspruch 5, wobei das transparente Fenster (2.5) Lichtaustrittsmodulierungsmittel (2.5.1) umfasst, um die Homogenität der Lichtemission durch und entlang der gesamten Fläche desselben zu verbessern.

## Revendications

1. Pare-soleil de véhicule (20) doté d'un ensemble miroir de courtoisie (10) doté d'un dispositif d'éclairage (3), dans lequel l'ensemble miroir de courtoisie (10) comprend :
- un porteur de support (1) configuré pour être fixé à un corps de pare-soleil (20),
- un miroir de courtoisie (2) ayant une surface principale (1.1), et étant fixé au porteur de support (1), dans lequel le miroir de courtoisie (2) définit une zone périphérique de miroir de courtoisie (2.2), et une zone entourant le miroir de courtoisie (7) configurée pour émettre la lumière vers l'extérieur de l'ensemble miroir de courtoisie (10),
- un dispositif d'éclairage (3) logé entre le porteur de support (1) et le miroir de courtoisie (2), dans lequel le dispositif d'éclairage (3) comprend :
o un premier guide de lumière (4) configuré pour émettre de la lumière sur la zone entourant le miroir de courtoisie (7), dans lequel le premier guide de lumière (4) comprend une surface principale parallèle à la surface principale (2.1) du miroir de courtoisie (2) ayant deux axes principaux s et t, dans lequel le premier guide de lumière (4) comprend un bord frontal (4.3) faisant face au miroir de courtoisie (2), un bord arrière (4.4) opposé au bord frontal (4.3), et un bord latéral (4.5) reliant le bord frontal (4.3) et le bord arrière (4.4), dans lequel le bord latéral (4.5) comprend un côté extérieur (4.5.1) tourné vers l'extérieur du premier guide de lumière (4) et un côté intérieur (4.5. 2) tourné vers l'intérieur de celui-ci,
o une première source de lumière (5) comprenant une LED configurée pour injecter de la lumière à l'intérieur du premier guide de lumière (4), et
o une carte de circuit imprimé (6) parallèle à la surface principale (1.1) du miroir de courtoisie (2) et fixée au porteur de support (1), à laquelle la première source de lumière (5) est fixée, dans lequel la première source de lumière (5) comporte une seule LED,
**caractérisé en ce que** le premier guide de lumière (4) comprend une partie d'émission de lumière (4.1) ayant une forme annulaire qui s'étend le long de la zone périphérique du miroir de courtoisie (2.2), dans lequel ladite partie d'émission de lumière (4.1) est configurée pour émettre de la lumière sur la zone entourant le miroir (7), et une partie de distribution de lumière (4.2) qui est située dans l'espace libre défini par la forme annulaire de la partie d'émission de lumière (4.1), de telle manière que les deux parties (4.1, 4.2) sont reliées, dans lequel ladite partie de distribution de lumière (4.2) est configurée pour distribuer la lumière émise par la première source de lumière (5) vers la partie d'émission de lumière (4.1) et,
dans lequel la partie de distribution de lumière (4.1) a un axe principal longitudinal r et elle comprend :
- un point d'injection de lumière (4.2.1) en correspondance avec la première source de lumière (5) comprenant des moyens de diffusion de lumière (4.2.1.1),
- une première partie de distribution de lumière (4.2.2) configurée pour distribuer la lumière vers deux moitiés (4.1.1, 4.1.2) de la partie d'émission de lumière (4.1),
- et deux deuxièmes parties de distribution de lumière (4.2.3) chacune étant configurée pour distribuer la lumière sur deux quarts (4.1.3, 4.1.4, 4.1.5, 4.1.6) de la partie d'émission de lumière (4.1),
dans lequel la partie d'émission de lumière (4.1) comprend des moyens d'extraction de lumière (4.1.9) répartis sur la surface de la partie d'émission de lumière (4.1) et configurés pour émettre uniformément la lumière reçue par la partie de distribution de lumière (4.2), à travers la zone entourant le miroir de courtoisie (7).

2. Pare-soleil de véhicule (20) doté d'un ensemble miroir de courtoisie (10) doté d'un dispositif d'éclairage (3) selon la revendication 1, dans lequel les moyens de diffusion de lumière (4.2.1.1) comprennent une forme conique.

3. Pare-soleil de véhicule (20) doté d'un ensemble miroir de courtoisie (10) doté d'un dispositif d'éclairage (3) selon la revendication 1, dans lequel les moyens de diffusion de lumière (4.2.1.1) comprennent deux plans inclinés.

4. Pare-soleil de véhicule (20) doté d'un ensemble miroir de courtoisie (10) doté d'un dispositif d'éclairage (3) selon la revendication 1, dans lequel la surface principale (2.1) du miroir de courtoisie (2) a deux axes principaux, un grand axe m et un petit axe n, et dans lequel l'axe principal longitudinal r de la partie de distribution de lumière (4.2) est parallèle au petit axe n.

5. Pare-soleil de véhicule (20) doté d'un ensemble miroir de courtoisie (10) doté d'un dispositif d'éclairage (3) selon la revendication 1, dans lequel le miroir de courtoisie (2) comprend une plaque transparente (2.3), une zone réfléchissante de placage miroir (2.4), et une fenêtre transparente (2.5).

6. Pare-soleil de véhicule (20) doté d'un ensemble miroir de courtoisie (10) doté d'un dispositif d'éclairage (3) selon la revendication 1, dans lequel la zone entourant le miroir de courtoisie (7) est configurée par un espace (8) entre le périmètre du miroir de courtoisie (2) et une paroi périmétrique (1.2) du porteur de support (1) ou par un espace (8) entre le périmètre du miroir de courtoisie (2) et la paroi du corps du pare-soleil (20).

7. Pare-soleil de véhicule (20) doté d'un ensemble miroir de courtoisie (10) doté d'un dispositif d'éclairage (3) selon la revendication 6, dans lequel des moyens d'extraction de lumière (4.1.9) sont configurés pour émettre de la lumière à travers le côté extérieur (4.5.1) du bord latéral (4.5) du premier guide de lumière (4).

8. Pare-soleil de véhicule (20) doté d'un ensemble miroir de courtoisie (10) doté d'un dispositif d'éclairage (3) selon la revendication 1, dans lequel la zone entourant le miroir de courtoisie (7) coïncide avec la zone périphérique du miroir de courtoisie (2.2) de telle manière que la lumière est émise à travers le miroir de courtoisie (2).

9. Pare-soleil de véhicule (20) doté d'un ensemble miroir de courtoisie (10) doté d'un dispositif d'éclairage (3) selon la revendication 8, dans lequel le miroir de courtoisie (2) comprend une fenêtre transparente périphérique (2.5) sur la zone périphérique du miroir de courtoisie (2.2).

10. Pare-soleil de véhicule (20) doté d'un ensemble miroir de courtoisie (10) doté d'un dispositif d'éclairage (3) selon la revendication 8, dans lequel les moyens d'extraction de lumière (4.1.9) sont configurés pour émettre de la lumière à travers le bord frontal (4.3) du premier guide de lumière (4).

11. Pare-soleil de véhicule (20) doté d'un ensemble miroir de courtoisie (10) doté d'un dispositif d'éclairage (3) selon la revendication 1, dans lequel le dispositif d'éclairage (3) comprend un deuxième guide de lumière (9) configuré pour émettre de la lumière à travers le miroir de courtoisie (2) et une deuxième LED (11) configurée pour injecter de la lumière à l'intérieur du deuxième guide de lumière (9).

12. Pare-soleil de véhicule (20) doté d'un ensemble miroir de courtoisie (10) doté d'un dispositif d'éclairage (3) selon la revendication 11, dans lequel le dispositif d'éclairage (3) comprend un troisième guide de lumière (12) configuré pour émettre de la lumière à travers le miroir de courtoisie (2) et une troisième LED (13) configurée pour injecter de la lumière à l'intérieur du troisième guide de lumière (12) .

13. Pare-soleil de véhicule (20) doté d'un ensemble miroir de courtoisie (10) doté d'un dispositif d'éclairage (3) selon les revendications 11 ou 12, dans lequel la deuxième LED (11) est montée sur la carte de circuit imprimé (6) sur laquelle la première LED (5) est montée, ou la deuxième LED (11) et la troisième LED (13) sont montées sur la carte de circuit imprimé (6) sur laquelle la première LED (5) est montée.

14. Pare-soleil de véhicule (20) doté d'un ensemble miroir de courtoisie (10) doté d'un dispositif d'éclairage (3) selon l'une quelconque des revendications 11 à 13, dans lequel le porteur de support (1) comprend une paroi principale (1.1) parallèle à la surface principale (2.1) du miroir de courtoisie (2) et une paroi verticale (1.3) entre le premier guide de lumière (4) et le deuxième guide de lumière (9), ou entre le premier guide de lumière (4) et le deuxième guide de lumière (9) et entre le premier guide de lumière (4) et le troisième guide de lumière (12), dans lequel la paroi verticale (1.3) est configurée pour éviter que la lumière injectée dans le premier guide de lumière (4) soit mélangée avec la lumière injectée dans le deuxième guide de lumière (9) et avec la lumière injectée dans le troisième guide de lumière (12).

15. Pare-soleil de véhicule (20) doté d'un ensemble miroir de courtoisie (10) doté d'un dispositif d'éclairage (3) selon la revendication 5, dans lequel la fenêtre transparente (2.5) comprend des moyens de modulation de sortie de lumière (2.5.1) afin d'améliorer l'homogénéité de l'émission de lumière à travers et le long de toute sa surface.
